# EUROPÄISCHE PATENTSCHRIFT

(11) **EP 2 935 880 B1**
(45) Veröffentlichungstag und Bekanntmachung des Hinweises auf die Patenterteilung: **11.09.2019**
(21) Anmeldenummer: 13824121.1
(22) Anmeldetag: 23.12.2013
(51) Int. Cl.: F03D 80/30

(54) **VERFAHREN ZUR ABLEITUNG DER ELEKTRISCHEN ENERGIE EINES BLITZSCHLAGS BEI EINER WINDENERGIEANLAGE UND WINDENERGIEANLAGE**
METHOD FOR ARRESTING THE ELECTRIC ENERGY OF A LIGHTNING STRIKING A WIND TURBINE, AND WIND TURBINE
PROCÉDÉ POUR DÉVIER L'ÉNERGIE ÉLECTRIQUE D'UN COUP DE FOUDRE FRAPPANT UNE ÉOLIENNE ET ÉOLIENNE

(30) Priorität: 22.12.2012 DE 102012113075
(43) Veröffentlichungstag der Anmeldung: 28.10.2015
(73) Patentinhaber: 2-B Energy B.V., 7556 PE Hengelo (NL)
(72) Erfinder: JAKOBSSON, Mikael, A-1230 Wien (AT); PEELS, Herbert, NL-7631 HS Ootmarsum (NL)
(74) Vertreter: Träger, Denis
(86) Internationale Anmeldenummer: PCT/EP2013/003904
(87) Internationale Veröffentlichungsnummer: WO 2014/095084

(56) Entgegenhaltungen:
- EP-A1- 2 520 796
- EP-A2- 1 568 883
- DE-A1-102007 052 525
- US-A1- 2009 038 819
- US-A1- 2009 121 491
- US-A1- 2011 305 573
- US-B1- 7 377 750

## Beschreibung

Die Erfindung betrifft ein Verfahren zur Ableitung der elektrischen Energie eines Blitzschlags bei einer Windenergieanlage gemäß dem Oberbegriff des Anspruchs 1. Des weiteren betrifft die Erfindung eine Windenergieanlage gemäß dem Oberbegriff des Anspruchs 5.

Windenergieanlagen dienen zur Umwandlung von Windenergie in elektrische Energie. Hierzu weisen Sie einen Rotor mit wenigstens einem Rotorblatt auf. Der durch einströmenden Wind in Drehung versetzte Rotor überträgt die Rotationsenergie über seine im Wesentlichen horizontale Drehachse an einen Generator, gegebenenfalls mittels eines zwischengeschalteten Getriebes. Der Generator wandelt die Rotationsenergie in elektrische Energie um. Die Lagerung der Drehachse des Rotors ist üblicherweise ebenso wie der Generator und weitere mechanische und elektrische Anlagen in einem Gehäuse einer sogenannten Gondel angeordnet. Diese Gondel dient unter anderem zur Ausrichtung des Rotors in Windrichtung. Dazu ist sie um eine vertikale Drehachse drehbar auf einem Turm der Windenergieanlage gelagert.

Um eine möglichst hindernisfreie und ungestörte Windströmung zu ermöglichen, werden Windenergieanlage typischerweise in von höheren Erhebungen freier Umgebung aufgestellt. Dementsprechend stellen Windenergieanlagen in aller Regel in einem großen Umkreis die höchste Erhebung dar. Dies führt insbesondere bei Gewittern dazu, dass es sehr häufig zu Blitzseinschlägen in die Windenergieanlagen kommt. Da die Rotorblätter die Gondel in der Höhe nochmals weit überragen, schlagen die Blitze üblicherweise am häufigsten in die Rotorblätter ein.

Dem Blitzeinschlag in die Rotorblätter wird in der Regel Rechnung getragen, indem Blitzableiterelemente an der Oberfläche jedes der Rotorblätter installiert werden. Es handelt sich dabei um elektrisch leitfähige Elemente, also beispielsweise metallische Platten. Zumindest sind die Blitzableiterelemente an der Blattspitze angeordnet, da dort mit den meisten Einschlägen zu rechnen ist. Im Übrigen werden noch entlang der Seitenkante eines Rotorblatts weitere Blitzableiterelemente verteilt. Üblicherweise verlaufen im Innern der Rotorblätter ausgehend von den Blitzableiterelementen elektrisch leitfähige Ableitungselemente, die üblicherweise am anderen Ende mit der Rotordrehachse verbunden sind. Über diese ebenfalls selber elektrisch leitfähige Rotordrehachse aus einem metallischen Werkstoff wird dann die elektrische Energie eines Blitzschlag über den Turm in Richtung Erdboden abgeleitet.

Das Dokument US 7 377 750 B1 offenbart ein System gegen Blitzschläge für eine Windenergieanlage, bei der elektrische Leiter durch das Innere der Gondel verlaufen. Aus dem Dokument US 2009/121491 A1 geht eine Windenergieanlage mit einer Gehäusestruktur hervor, die als faradayscher Käfig gegen Blitzschläge ausgebildet ist. Nachteilig ist daran, dass aufgrund der elektrischen Energie eines Blitzschlags mit den hohen Strömen trotz der üblicherweise massiven Auslegung der mechanischen und elektrischen Komponenten einer Windenergieanlage diese bei einer Stromdurchleitung in Mitleidenschaft gezogen werden.

Das Dokument US2011/305573 wird als nächstliegender Stand der Technik angesehen und offenbart die Merkmale im Oberbegriff der Ansprüche 1 bzw. 5.

Aufgabe der vorliegenden Erfindung ist daher, ein Verfahren zur Ableitung der elektrischen Energie eines Blitzschlag und eine entsprechende Windenergieanlage zu schaffen, bei der die Belastung der mechanischen und elektrischen Komponenten innerhalb der Gondel der Windenergieanlage verringert oder vollständig beseitigt wird.

Diese Aufgabe wird durch ein Verfahren zur Ableitung der elektrischen Energie eines Blitzschlags bei einer Windenergieanlage mit den Maßnahmen des Anspruchs 1 gelöst. Das Verfahren zeichnet sich dadurch aus, dass die vom Blitzableiterelement aufgenommene elektrische Energie eines Blitzschlags auf ein relativ zur Gondel zumindest im Wesentlichen ortsfestes und elektrisch leitfähiges Kontaktelement übertragen wird. Dies bedeutet, dass die elektrische Energie gerade nicht über die Rotorachse in die Gondel und auf die dort vorhandenen mechanischen und elektrischen Komponenten, wie Lager, Getriebe und Generator übertragen wird. Stattdessen wird die Energie vom

Blitzableiterelement auf ein elektrisch leitfähigen Kontaktelement übertragen, das insbesondere mit der Gondel verbunden ist.

Bevorzugt wird die elektrische Energie mittels eines Schleifkontakts auf das Kontaktelement übertragen. Der Schleifkontakt ist insbesondere rotorseitig, weiter bevorzugt rotorblattseitig angeordnet. Es handelt sich bei den Schleifkontakt insbesondere um ein flexibles Kontaktelement, insbesondere eine Bürste, eine Kohle, einen federbelasteten Kontakt oder ähnliches. Das gondelseitige Kontaktelement ist insbesondere ebenfalls als Schleifkontakt ausgebildet. Es handelt sich dabei insbesondere um einen Schleifring, auf den die elektrische Energie eines Blitzschlags zur Erdung übertragen wird. Insbesondere ist das Kontaktelement an der dem Rotor zugewandten Außenseite der Gondel angeordnet. Somit wird die elektrische Energie eines Blitzschlags mittels der flexiblen Schleifkontakte des Rotors auch während der Drehung desselben jederzeit auf den korrespondierenden Schleifkontakt beziehungsweise Schleifring an der Gondel übertragen. Dies führt dazu, dass die mechanischen und elektrischen Komponenten im Innern der Gondel nicht mit der elektrischen Energie des Blitzschlags belastet werden.

Weiter bevorzugt wird die elektrische Energie eines Blitzschlag durch das Innere des Rotorblattes mittels eines elektrisch leitfähigen Ableitungselement vom Blitzableiterelement zum Kontaktelement übertragen. Das Kontaktelement ist vorzugsweise in der Nähe der Rotorblätter und/oder der Rotorblattnabe angeordnet. Dementsprechend wird die elektrische Energie mittels der Ableitelemente durch die Rotorblätter und Kontaktstücke über das Kontaktelement abgeleitet. Damit wird eine zuverlässige elektrische Ableitung sichergestellt.

Nach der Erfindung wird die elektrische Energie eines Blitzschlags praktisch ausschließlich außerhalb der Gondel abgeleitet. Die Ableitung erfolgt erfindungsgemäß über die Oberfläche der Gondel. Besonders bevorzugt wird mittels der Rotorachse und/oder der Rotorachslager und/oder der elektrischen und/oder mechanischen Anlagen und anderer Komponenten innerhalb und/oder außerhalb der Gondel zumindest nahezu keine elektrische Energie des Blitzschlag abgeleitet. Bevorzugt sind dazu außen an der Oberfläche der Gondel elektrisch leitfähige, insbesondere plattenförmige, Blitzableiterelemente angeordnet. Über diese wird die elektrische Energie in Richtung Erdboden beziehungsweise Erdung abgeleitet. Vorzugsweise wird zusätzlich ein Blitzableiter am Turm vorgesehen. Zur Übertragung der elektrischen Energie eines Blitzschlags von der Gondel auf den Turm wird insbesondere zusätzlich ein elektrisch leitfähiger Schleifkontakt dazwischen vorgesehen. Damit bleibt die Gondel gegenüber dem Turm drehbar, während gleichzeitig die Ableitung der elektrischen Energie sichergestellt wird.

Die Aufgabe der Erfindung wird außerdem gelöst durch eine Windenergieanlage, die zur Ausführung des oben beschriebenen Verfahren geeignet ist. Insbesondere handelt es sich dabei um eine Windenergieanlage mit den Merkmalen des Anspruchs 5. Eine solche Windenergieanlage zeichnet sich dadurch aus, dass der Rotor wenigstens ein leitfähiges Kontaktstück aufweist zur Übertragung der elektrischen Energie eines Blitzschlag auf ein Kontaktelemente der Gondel. Dementsprechend wird die elektrische Energie des Blitzschlags über das Kontaktstück am Rotor auf das Kontaktelement an der Gondel übertragen. Eine Durchleitung über die mechanischen und/oder elektrischen Komponenten innerhalb der Gondel erfolgt damit zumindest praktisch nicht mehr. Dies wird unter anderen insbesondere dadurch erreicht, dass keine elektrische Verbindung zwischen den Blitzableiterelementen am Rotorblatt und der Rotorachse vorhanden ist.

Vorzugsweise ist das wenigstens eine Kontaktstück am Rotorblatt und/oder an der Rotornabe angeordnet. Bevorzugt ist an jedem der Rotorblätter wenigstens ein Kontaktstück vorgesehen. Besonders bevorzugt steht das wenigstens eine Kontaktstück nicht in elektrisch leitfähiger Verbindung mit der Rotorachse und/oder der Rotornabe. Weiter bevorzugt ist das wenigstens eine Kontaktelement an der dem Rotor zugewandten Seite der Gondel angeordnet. Somit kann zwischen dem am rotierenden Rotor angeordneten Kontaktstück und dem korrespondierenden Kontaktelement an der Gondel elektrischer Strom fließen. Folglich ist die elektrische Energie eines Blitzschlags direkt vom Rotor auf einen entsprechenden Blitzableiter an der Gondel über das dort angeordnete Kontaktelement ableitbar. Damit wird eine Durchleitung über empfindliche mechanische oder elektrische Komponenten insbesondere in der Gondel wirksam verhindert.

Das Kontaktstück und das Kontaktelement sind derart korrespondierend ausgebildet, dass eine Übertragung der elektrischen Energie unabhängig vom Rotationszustand des Rotors erfolgen kann. Dies bedeutet, dass in jeder denkbaren Rotationsstellung des Rotors eine elektrisch leitfähige Verbindung zwischen dem wenigstens einen Kontaktstück und dem wenigstens einen Kontaktelement hergestellt ist. Dies gilt im übrigen insbesondere auch für nahezu beliebige Umdrehungsgeschwindigkeiten des Rotor. Vorzugsweise steht das Kontaktstück am Rotor während der Umdrehung des Rotors zumindest nahezu ununterbrochen mit dem korrespondierenden Kontaktelement an der Gondel im elektrisch leitleitfähigen Kontakt.

Weiter bevorzugt ist das gondelseitige Kontaktelement als Schleifkontakt ausgebildet. Insbesondere handelt es sich bei dem Kontaktelement um einen Kontaktring und/oder einen Schleifring. Vorzugsweise durchtritt die Drehachse des Rotor das Innere des ringförmigen Kontaktelements. Dies bedeutet umgekehrt, dass das ringförmige Kontaktelement die Drehachse des Rotor gondelseitig umgibt. Vorzugsweise ist das Kontaktelement an der Außenwand des Gehäuses der Gondel angeordnet beziehungsweise auf dieses aufgebracht. In einem zentralen Bereich des Kontaktstücks ist eine Öffnung zum Durchtritt der Drehachse des Rotors vorgesehen. Die Drehachse ist vorzugsweise zumindest durch das Kontaktelement verlaufend angeordnet. Weiter bevorzugt ist das rotorseitige Kontaktstück als flexibles Kontaktstück ausgebildet. Insbesondere handelt es sich bei dem flexiblen Kontaktstück um eine Bürste, einen fehlerbelasteten Kontakt, eine Kohle, ein Fehlerblech oder Ähnliches.

Besonders bevorzugt ist im Innern des Rotorblattes ein elektrischer Leiter vorgesehen. Dieser Leiter ist zur Ableitung der elektrischen Energie eines Blitzschlags mit dem elektrisch leitfähigen Blitzableiterelement verbunden. Der Leiter ist insbesondere drahtförmig beziehungsweise als langgestreckter Leiter ausgebildet. Dies sorgt für eine zuverlässige Ableitung der Blitzschlagenergie durch das Innere der Rotorblätter.

In einer bevorzugten Ausführung der Erfindung ist außen am Gehäuse der Gondel wenigstens ein zusätzlicher Leiter zu elektrischen Verbindung des Kontaktelement mit wenigstens einem zusätzlich Blitzableiter vorgesehen. Als zusätzlicher Blitzableiter kann beispielsweise ein insbesondere stabförmiger Blitzableiter vorgesehen sein. Dieser Blitzableiter kann insbesondere dachseitig angeordnet sein. Zur Verbindung mit dem zusätzlichen Blitzableiter kann beispielsweise eine insbesondere einstückige Ausbildung des entsprechenden Kontaktelement mit entsprechenden Ausläufern vorgesehen sein. Das wenigstens eine Kontaktelement an der Gondel ist insbesondere als flacher, insbesondere plattenförmiger oder schichtförmiger, elektrischer Leiter ausgebildet. Vorzugsweise handelt es sich beim Kontaktelement um eine Metallplatte. Es können bevorzugt auch mehrere Metallplatten vorgesehen sein.

Besonders bevorzugt besteht zwischen der Rotorachse und/oder dem Getriebe und/oder dem Generator keine elektrisch leitfähige Verbindung zu einem der Rotorblätter und/oder der Blitzableiterelemente. Indem vorzugsweise zusätzlich isolierende Elemente angebracht sind, kann verlässlich eine Durchleitung der elektrischen Energie durch eines der genannten Bauteile verhindert werden. Durch eine entsprechende zusätzliche Isolierung kann insbesondere auch ein Spannungsüberschlag oder Ähnliches zuverlässig unterbunden werden.

Weiter bevorzugt ist zwischen der Gondel und dem Turm, insbesondere zwischen Blitzableitern derselben, eine elektrisch leitfähige Verbindung hergestellt. Vorzugsweise handelt es sich dabei um einen Schleifkontakt. Damit wird eine zuverlässige Ableitung der elektrischen Energie eines Blitzschlags von der Gondel über den Turm in das Erdreich gewährleistet. Zusätzlich kann insbesondere am Turm noch ein separater Blitzableiter in Form eines entsprechenden elektrischen Leiters vorgesehen sein. Ein solcher elektrischer Leiter beziehungsweise Blitzableiter ist dazu insbesondere außen am Turm angeordnet, kann jedoch auch innerhalb desselben verlaufen.

Besonders bevorzugt verläuft ein mit dem elektrischen Blitzableiterelement verbundenes elektrisches Ableitelement im Innern des Rotorblattes. Das elektrische Ableitelement dient zur Ableitung der elektrischen Energie eines Blitzschlag vom Blitzableiterelement an der Oberfläche des Rotorblatts zum entsprechenden Kontaktstück desselben. Diese Ausbildung dient statt der im Stand der Technik üblichen Ableitung an die Drehachse des Rotors einer entsprechenden Ableitung über das wenigstens eine Kontaktelement der Gondel und entsprechende weitere Blitzableiter. Die Komponenten der Windenergieanlage werden so geschont.

Ein bevorzugtes Ausführungsbeispiel Erfindung wird im Folgenden anhand der Zeichnung näher beschrieben. In dieser zeigen:
- Fig. 1:: Einen seitlichen Querschnitt durch einen Teil einer erfindungsgemäßen Windenergieanlage, und
- Fig. 2:: eine Frontalansicht einer Windenergieanlage ohne montierten Rotor.

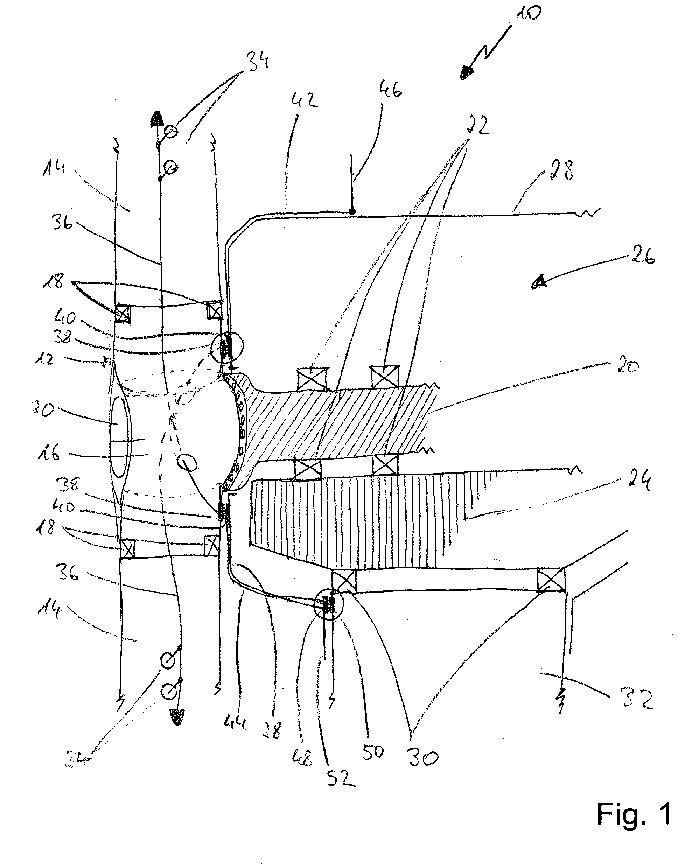

In der Fig. 1 ist ein Ausschnitt einer Windenergieanlage dargestellt. Ein Rotor 12 ist dabei mit zwei Rotorblätter 14 ausgestattet. Für die Erfindung können aber ebenso andere Anzahlen, wie insbesondere drei Rotorblätter 14 Verwendung finden. Die Rotorblätter 14 sind an einer Rotornabe 16 mittels sogenannter Blattlager 18 um die Längsachse der Rotorblätter 14 rotierbar befestigt. Die Blattlager 18 dienen dazu, den Anstellwinkel der Rotorblätter 14 verändern zu können, den so genannten "Pitch". Damit lässt sich das Verhalten des Rotors 12 an die Windverhältnisse anpassen.

Die Rotornabe 16 ist mit dem Endbereich einer Rotorachse 20 verbunden. Die Rotorachse 20 ist wiederum mit einem oder mehreren Rotorlagern 22 auf einer Basisplatte 24 einer Gondel 26 befestigt. Die Gondel 26 weist ein Gehäuse 28 auf, dass insbesondere die in der Gondel 26 angeordneten mechanischen und elektrischen Komponenten und Anlagenteile beispielsweise vor Witterungseinflüssen schützt. Es handelt sich dabei unter anderem um den Generator, gegebenenfalls ein Getriebe, elektrische und mechanische Anlagenteile und diverse Steuerungseinrichtungen für den Betrieb der Windenergieanlage 10.

Die Gondel 26 ist wiederum mittels eines Gondellagers 30 drehbar auf einen Turm 32 befestigt. Die Gondel 26 ist dementsprechend um eine vertikale Drehachse rotierbar angeordnet. Somit ist die Rotorachse 20 innerhalb einer horizontalen Ebene drehbar, um so in Richtung des einströmenden Windes ausgerichtet werden zu können.

An den Rotorblättern 14, unter anderem seitlich, sind so genannte Blitzableiterelemente 34 angeordnet. Es handelt sich dabei um elektrisch leitfähige Bereiche an der Oberfläche der Rotorblätter 14, beispielsweise in Form von Metallplatten. Ein Blitzeinschlag kann dementsprechend geordnet über die Blitzableiterelemente 34 erfolgen. Dazu sind die Blitzableiterelemente 34 mittels jeweils eines Ableitungselements 36 des Rotorblatts 14 verbunden. Das Ableitelement 36 verläuft im Innern des jeweiligen Rotorblatts 14. Es ist dabei im wesentlichen mittig im hohlen Rotorblatt 14 angeordnet. Abgesehen von den dargestellten Blitzableiterelementen 34 an den Seitenflanken der Rotorblätter 14 können zusätzliche Blitzableiterelemente 34 weiter an den Enden der Rotorblätter 14 vorgesehen sein, insbesondere an deren Blattspitze.

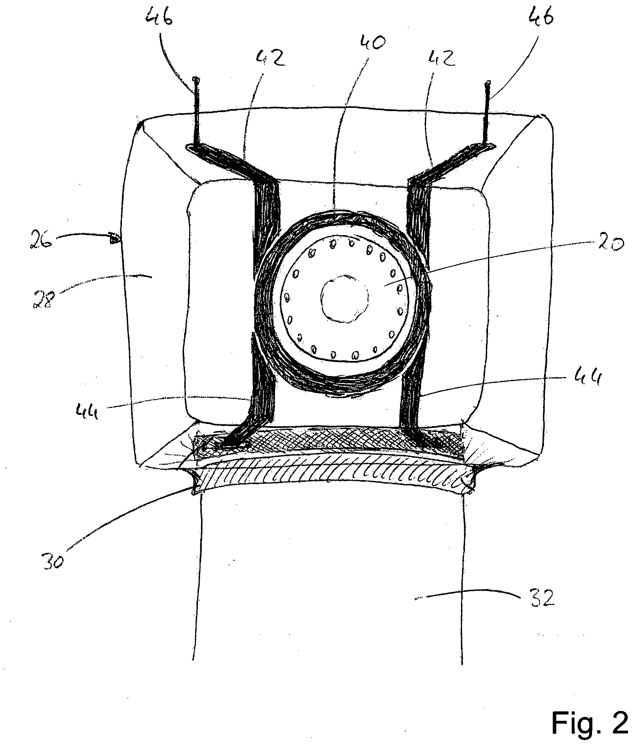

Das den jeweiligen Blitzableiterelementen 34 gegenüberliegende Ende des Ableitungselements 36 ist mit einem Kontaktstück 38 verbunden. Dementsprechend besteht eine leitfähige Verbindung von den Blitzableiterelementen 34 über das Ableitungselement 36 bis hin zum Kontaktstück 38. Das Kontaktstück 38 ist auf der der Gondel 26 zugewandten Seite der Rotornabe 16 angeordnet. Genau gegenüberliegend des Kontaktstücks 38 ist am Gehäuse 28 der Gondel 26 ein korrespondierendes Kontaktelement 40 vorgesehen. Das Kontaktelement 40 ist entsprechend gegenüberliegend dem Kontaktstück 38 ausgerichtet. Wie in Fig. 2 dargestellt ist, zeichnet sich das Kontaktelement 40 im Kern durch eine ringförmige Gestalt aus. Im übrigen ist das Kontaktelement 40 die Rotorachse 20 umgebend außen am Gehäuse 28 der Gondel 26 aufgebracht.

Im vorliegenden Fall ist an jedem Rotorblatt 14 ein separates Kontaktstück 38 vorgesehen. Die beiden Kontaktstücke 38 sind als bürstenähnliche Elemente ausgebildet. Bei einer Drehung des Rotor 12 um dessen Drehachse 20 streifen die Kontaktstücke 38 dementsprechend umlaufend an dem ringförmigen Kontaktelement 40 entlang. Dies wird dadurch erreicht, dass der hinreichend kleine Abstand zwischen der Rotornabe 16 und dem Gehäuse 28 entsprechend durch das Kontaktstück 38 und das Kontaktelement 40 überbrückt wird. Außerdem bleibt der Abstand zumindest im Wesentlichen konstant während eines Umlaufs des Rotors 12. Durch die flexible beziehungsweise federnde Ausbildung des ringförmigen Kontaktstücks 38 wird zusätzlich eine jederzeit gute Kontaktierung zwischen den Kontaktstücken 38 und dem Kontaktelement 40 sichergestellt.

Das Kontaktelement 40 weist zum einen obere Ausläufer 42 und zum anderen untere Ausläufer 44 auf. Die oberen Ausläufer 42 dienen zur Herstellung einer elektrisch leitfähigen Verbindung mit oben auf dem Gehäuse 28 angeordneten Blitzableiterstäben 46. Hier sind zwei dieser Blitzableiterstäbe 46 vorgesehen. Sollte ein Blitzschlag im Bereich der Gondel 26 einschlagen, sorgen diese Blitzableiterstäbe 46 für eine Ableitung der elektrischen Energie über die Ausläufer 42 des Kontaktelements 40 in Richtung der Erdung.

Die unteren Ausläufer 44 dienen zur Ableitung der eingeleiteten elektrischen Energie eines Blitzschlag in Richtung Erdboden beziehungsweise Erdung. Die Ausläufer 44 verlaufen dementsprechend zu einem weiteren Paar Schleifkontakten im Bereich der drehbaren Verbindung zwischen Gondel 26 und Turm 32 in der Nähe des Gondellagers 30. Dort ist ebenfalls ein Kontaktstück 38 am Gehäuse 28 der Gondel 26 angeordnet. Um den Turm 32 umlaufend ist ein korrespondierenden bandförmiges Kontaktelement 50 angeordnet. Somit existiert ebenfalls eine leitfähige Verbindung zwischen der Gondel 26 und dem Turm 32. Am Turm 32 ist dann üblicherweise ein Blitzableiter 52 vorgesehen, der zur Ableitung der elektrischen Energie in Richtung Untergrund beziehungsweise Erdung sorgt.

Das Verfahren zur Ableitung funktioniert wie folgt: Über ein Blitzableiterelement 34 kann elektrische Energie eines Blitzschlag aufgenommen und über das Ableitungselements 36 im Rotorblatt 14 weitergeleitet werden. Über das Kontaktstück 38 und das Kontaktelement 40 mit den Ausläufern 44 fließt die Energie weiter über den an der Gondel 26 Turm 32 angeordneten Schleifkontakt mit dem Kontaktstück 48 und dem Kontaktelement 50 zum Blitzableiter 52 in Richtung Untergrund ab. Eine Ableitung der elektrischen Energie insbesondere über die Rotorachse 20 und die Rotorlager 22 ist damit nicht mehr erforderlich und wird somit verhindert.

### Bezugszeichenliste

- 10: Windenergieanlage
- 12: Rotor
- 14: Rotorblatt
- 16: Rotornabe
- 18: Blattlager
- 20: Rotorachse
- 22: Rotorlager
- 24: Basisplatte
- 26: Gondel
- 28: Gehäuse
- 30: Gondellager
- 32: Turm
- 34: Blitzableiterelement
- 36: Ableitelement
- 38: Kontaktstück
- 40: Kontaktelement
- 42: Ausläufer
- 44: Ausläufer
- 46: Blitzableiterstab
- 48: Kontaktstück
- 50: Kontaktelement
- 52: Blitzableiter

## Patentansprüche

1. Verfahren zur Ableitung der elektrischen Energie eines Blitzschlags bei einer Windenergieanlage (10), wobei die Windenergieanlage (10) wenigstens einen an einer Gondel (26) drehbar gelagerten Rotor (12) mit wenigstens einem Rotorblatt (14) aufweist und wobei das Rotorblatt (14), insbesondere an der Oberfläche und/oder im Bereich der Rotorblattspitze, wenigstens ein elektrisch leitfähiges Blitzableiterelement (34) aufweist, wobei die vom Blitzableiterelement (34) aufgenommene elektrische Energie eines Blitzschlags auf ein relativ zur Gondel (26) zumindest im Wesentlichen ortsfestes, elektrisch leitfähiges Kontaktelement (40) übertragen wird, wobei die elektrische Energie mittels wenigstens eines rotorseitigen oder rotorblattseitigen flexiblen Kontaktelements auf das Kontaktelement (40) an der Gondel (26) übertragen wird, und dass die elektrische Energie des Blitzschlags über die Oberfläche der Gondel (26) und praktisch ausschließlich außerhalb der Gondel abgeleitet wird, **dadurch gekennzeichnet, dass** die elektrische Energie eines Blitzschlags über das Kontaktstück (38) des Rotors (12) und das Kontaktelement (40) der Gondel (26) abgeleitet wird, die jeweils im Bereich zwischen Rotor (12) und Gondel (26) elektrisch verbunden angeordnet sind.

2. Verfahren nach Anspruch 1, **dadurch gekennzeichnet, dass** das rotorblattseitige flexible Kontaktelement als Schleifkontakt ausgebildet ist, wobei die elektrische Energie bevorzugt auf das an der Gondel (26) angeordnete Kontaktelement übertragen wird, insbesondere an einer vorzugsweise dem Rotor (12) zugewandten Außenseite der Gondel (26).

3. Verfahren nach Anspruch 1 oder 2, **dadurch gekennzeichnet, dass** die elektrische Energie durch das Innere des Rotorblattes (14) mittels eines elektrisch leitfähigen Ableitelements (36) vom Blitzableiterelement (34) zum Kontaktelement (40) übertragen wird.

4. Verfahren nach einem der vorhergehenden Ansprüche, **dadurch gekennzeichnet, dass** mittels der Rotorachse (20) und/oder der Rotornabe (16) und/oder der elektrischen und/oder mechanischen Anlagen und anderer Komponenten innerhalb und/oder außerhalb der Gondel (26) zumindest nahezu keine elektrische Energie des Blitzschlags geleitet wird.

5. Windenergieanlage, zur Ausführung eines Verfahrens nach einem der Ansprüche 1 bis 4, mit einem Rotor (12) mit wenigstens einem Rotorblatt (14), wobei der Rotor (12) mittels einer horizontalen Drehachse (20) drehbar an einer Gondel (26) gelagert ist, die vorzugsweise drehbar auf einem Turm (32) gelagert ist, und wobei das wenigstens eine Rotorblatt (14) wenigstens ein elektrisch leitfähiges Blitzableiterelement (34) aufweist, vorzugsweise an der Oberfläche und/oder im Bereich der Blattspitze, wobei der Rotor (12) wenigstens ein leitfähiges Kontaktstück (38) aufweist zur Übertragung der elektrischen Energie eines Blitzschlags auf ein Kontaktelement (40) der Gondel (26), wobei ein rotorseitiges oder rotorblattseitiges flexibles Kontaktstück (38) zur Übertragung der elektrischen Energie auf das Kontaktelement (40) an der Gondel (26) vorgesehen ist, um die elektrische Energie des Blitzschlags über die Oberfläche der Gondel (26) abzuleiten, wobei elektrische Leiter zur Ableitung der elektrischen Energie eines Blitzschlags praktisch ausschließlich außerhalb der Gondel vorgesehen sind, **dadurch gekennzeichnet, dass** das Kontaktstück (38) des Rotors (12) und das Kontaktelement (40) der Gondel (26) zur Ableitung der elektrischen Energie eines Blitzschlags im Bereich zwischen Rotor (12) und Gondel (26) elektrisch verbunden angeordnet sind.

6. Windenergieanlage nach Anspruch 5, **dadurch gekennzeichnet, dass** das wenigstens eine Kontaktstück (38) am Rotorblatt (14), insbesondere an jedem der Rotorblätter (14), und/oder an der Rotornabe (16) angeordnet ist, wobei vorzugsweise das wenigstens eine Kontaktstück (38) insbesondere nicht in elektrisch leitfähiger Verbindung mit der Rotorachse (20) und/oder der Rotornabe (16) steht.

7. Windenergieanlage nach Anspruch 5 oder 6, **dadurch gekennzeichnet, dass** das Kontaktstück (38) des Rotors (12) auf der der Gondel (26) zugewandten Seite der Rotornabe (16) angeordnet ist und dass das Kontaktelement (40) der Gondel (26) an der dem Rotor (12) zugewandten Seite der Gondel (26) angeordnet ist.

8. Windenergieanlage nach einem der Ansprüche 5 bis 7, **dadurch gekennzeichnet, dass** das Kontaktstück (38) und das Kontaktelement (40) derart korrespondierend ausgebildet sind, dass eine Übertragung der elektrischen Energie unabhängig vom Rotationszustand des Rotors (12) erfolgen kann, wobei vorzugsweise der Kontaktstück (38) am Rotor (12) während der Umdrehung des Rotors (12) zumindest nahezu ununterbrochen mit dem korrespondierenden Kontaktelement (40) an der Gondel (26) in elektrisch leitfähigem Kontakt steht.

9. Windenergieanlage nach einem der Ansprüche 5 bis 8, **dadurch gekennzeichnet, dass** das gondelseitige Kontaktelement (38) als Schleifkontakt ausgebildet ist, insbesondere als Kontaktring und/oder Schleifring, wobei die Drehachse (20) des Rotors (12) vorzugsweise das Innere des ringförmigen Kontaktelements (40) durchtritt, vorzugsweise zumindest nahezu mittig, und/oder dass das rotorseitige Kontaktstück (38) als flexibles Kontaktstück ausgebildet ist, vorzugsweise als Bürste, Federblech und/oder federbelasteter Kontakt.

10. Windenergieanlage nach einem der Ansprüche 5 bis 9, **dadurch gekennzeichnet, dass** ein insbesondere im Innern des Rotorblattes (14) verlaufender elektrischer Leiter, insbesondere ein Ableitelement (36), zur Ableitung elektrischer Blitzschlagenergie mit dem elektrisch leitfähigen Blitzableiterelement verbunden ist, wobei der Leiter vorzugsweise drahtförmig ausgebildet ist.

11. Windenergieanlage nach einem der Ansprüche 5 bis 10, **dadurch gekennzeichnet, dass** außen am Gehäuse (28) der Gondel (26) wenigstens ein zusätzlicher Leiter zur elektrischen Verbindung des Kontaktelements (40) mit wenigstens einem zusätzlichen Blitzableiter angeordnet sind, insbesondere einem dachseitigen und/oder stabförmigen Blitzableiter.

12. Windenergieanlage nach einem der Ansprüche 5 bis 11, **dadurch gekennzeichnet, dass** das wenigstens eine Kontaktelement (10) an der Gondel (26) als flacher, insbesondere plattenförmiger oder schichtförmiger, elektrischer Leiter ausgebildet sind, vorzugsweise als Metallplatte.

13. Windenergieanlage nach einem der Ansprüche 5 bis 12, **dadurch gekennzeichnet, dass** die Rotorachse (20) und/oder das Getriebe und/oder der Generator keine elektrisch leitfähige Verbindung zu einem der Rotorblätter (14) und/oder der Blitzableiterelemente (34) aufweisen, wobei bevorzugt Isolierungen vorgesehen sind.

14. Windenergieanlage nach einem der Ansprüche 5 bis 13, **dadurch gekennzeichnet, dass** zwischen der Gondel (26) und dem Turm (32), insbesondere zwischen Blitzableitern derselben, eine elektrisch leitfähige Verbindung hergestellt ist, vorzugsweise als Schleifkontakt.

15. Windenergieanlage nach einem der Ansprüche 5 bis 14, **dadurch gekennzeichnet, dass** ein mit dem elektrisch leitfähigen Blitzableiterelement (34) verbundenes elektrisch leitfähiges Ableitelement (36) im Inneren des Rotorblattes (14) verläuft zur Ableitung der elektrischen Energie eines Blitzschlags zum Kontaktstück (38).

## Claims

1. Method for diverting the electrical energy from a lightning strike on a wind turbine (10), wherein the wind turbine (10) has at least one rotor (12), mounted rotatably on a gondola (26) and having at least one rotor blade (14), and wherein the rotor blade (14), in particular on the surface and/or in the region of the rotor blade tip, has at least one electrically conductive lightning conductor element (34), wherein the electrical energy received by the lightning conductor element (34) from a lightning strike is transferred to an electrically conductive contact element (40) that is at least substantially stationary relative to the gondola (26), wherein the electrical energy is transferred, by way of at least one rotor-side or rotorblade-side flexible contact element, to the contact element (40) on the gondola (26), and wherein the electrical energy from the lightning strike is diverted over the surface of the gondola (26) and practically exclusively outside the gondola, **characterized in that** the electrical energy from a lightning strike is diverted over the contact piece (38) of the rotor (12) and the contact element (40) of the gondola (26), each of which are arranged so as to be electrically connected in the region between the rotor (12) and the gondola (26).

2. Method according to Claim 1, **characterized in that** the rotor blade-side flexible contact element is designed as a sliding contact, wherein the electrical energy is preferably transferred to the contact element arranged on the gondola (26), in particular to an outer side of the gondola (26) that preferably faces the rotor (12).

3. Method according to Claim 1 or 2, **characterized in that** the electrical energy is transferred from the lightning conductor element (34) to the contact element (40) through the inside of the rotor blade (14) by way of an electrically conductive diverter element (36).

4. Method according to one of the preceding claims, **characterized in that** at least virtually no electrical energy from the lightning strike is conducted by way of the rotor axis (20) and/or the rotor hub (16) and/or the electrical and/or mechanical installations and other components inside and/or outside the gondola (26).

5. Wind turbine for executing a method according to one of Claims 1 to 4, having a rotor (12) having at least one rotor blade (14), wherein the rotor (12) is mounted rotatably on a gondola (26) by way of a horizontal axis of rotation (20), which gondola is preferably mounted rotatably on a tower (32), and wherein the at least one rotor blade (14) has at least one electrically conductive lightning conductor element (34), preferably on the surface and/or in the region of the blade tip, wherein the rotor (12) has at least one conductive contact piece (38) in order to transfer the electrical energy from a lightning strike to a contact element (40) of the gondola (26), wherein a rotor-side or rotor blade-side flexible contact piece (38) is provided in order to transfer the electrical energy to the contact element (40) on the gondola (26), in order to divert the electrical energy from the lightning strike over the surface of the gondola (26), wherein electrical conductors are provided in order to divert the electrical energy from a lightning strike practically exclusively outside the gondola, **characterized in that** the contact piece (38) of the rotor (12) and the contact element (40) of the gondola (26) are arranged so as to be electrically connected in the region between the rotor (12) and the gondola (26) in order to divert the electrical energy from a lightning strike.

6. Wind turbine according to Claim 5, **characterized in that** the at least one contact piece (38) is arranged on the rotor blade (14), in particular on each of the rotor blades (14) and/or on the rotor hub (16), wherein the at least one contact piece (38) is in particular preferably not electrically conductively connected to the rotor axis (20) and/or the rotor hub (16).

7. Wind turbine according to Claim 5 or 6, **characterized in that** the contact piece (38) of the rotor (12) is arranged on that side of the rotor hub (16) facing the gondola (26), and **in that** the contact element (40) of the gondola (26) is arranged on that side of the gondola (26) facing the rotor (12).

8. Wind turbine according to one of Claims 5 to 7, **characterized in that** the contact piece (38) and the contact element (40) are correspondingly designed such that a transfer of electrical energy is able to take place independently of the state of rotation of the rotor (12), wherein the contact piece (38) on the rotor (12) makes at least virtually uninterrupted electrically conductive contact with the corresponding contact element (40) on the gondola (26) while the rotor (12) is rotating.

9. Wind turbine according to one of Claims 5 to 8, **characterized in that** the gondola-side contact element (38) is designed as a sliding contact, in particular as a contact ring and/or slip ring, wherein the axis of rotation (20) of the rotor (12) preferably passes through the inside of the ring-shaped contact element (40), preferably at least virtually in the middle, and/or **in that** the rotor-side contact piece (38) is designed as a flexible contact piece, preferably as a brush, spring steel sheet and/or spring-loaded contact.

10. Wind turbine according to one of Claims 5 to 9, **characterized in that** an electrical conductor running in particular inside the rotor blade (14), in particular a diverter element (36), is connected to the electrically conductive lightning conductor element in order to divert electrical lightning strike energy, wherein the conductor is preferably designed in the form of a wire.

11. Wind turbine according to one of Claims 5 to 10, **characterized in that** at least one additional conductor for electrically connecting the contact element (40) to at least one additional lightning conductor, in particular a rooftop and/or rod-shaped lightning conductor, is arranged externally on the housing (28) of the gondola (26).

12. Wind turbine according to one of Claims 5 to 11, **characterized in that** the at least one contact element (10) on the gondola (26) is designed as a flat, in particular plate-shaped or sheet-shaped, electrical conductor, preferably as a metal plate.

13. Wind turbine according to one of Claims 5 to 12, **characterized in that** the rotor axis (20) and/or the gear system and/or the generator do not have any electrically conductive connection to any of the rotor blades (14) and/or the lightning conductor elements (34), wherein isolation mechanisms are preferably provided.

14. Wind turbine according to one of Claims 5 to 13, **characterized in that** an electrically conductive connection, preferably in the form of a sliding contact, is created between the gondola (26) and the tower (32), in particular between lightning conductors thereof.

15. Wind turbine according to one of Claims 5 to 14, **characterized in that** an electrically conductive diverter element (36), connected to the electrically conductive lightning conductor element (34), runs inside the rotor blade (14) in order to divert the electrical energy from a lightning strike to the contact piece (38).

## Revendications

1. Procédé pour dériver l'énergie électrique d'un éclair sur un aérogénérateur (10), l'aérogénérateur (10) possédant au moins un rotor (12) comprenant au moins une pale de rotor (14), monté à rotation au niveau d'une nacelle (26) et la pale de rotor (14) possédant, notamment sur la surface et/ou dans la zone de la pointe de pale de rotor, au moins un élément parafoudre (34) électriquement conducteur, l'énergie électrique d'un éclair absorbée par l'élément parafoudre (34) étant transmise sur un élément de contact (40) électriquement conducteur au moins sensiblement en position fixe par rapport à la nacelle (26), l'énergie électrique étant transmise sur l'élément de contact (40) au niveau de la nacelle (26) au moyen d'au moins un élément de contact flexible côté rotor ou côté pale de rotor, et l'énergie électrique de l'éclair étant dérivée par le biais de la surface de la nacelle (26) et pratiquement exclusivement à l'extérieur de la nacelle, **caractérisé en ce que** l'énergie électrique d'un éclair est dérivée par le biais de la pièce de contact (38) du rotor (12) et l'élément de manière de contact (40) de la nacelle (26), lesquels sont disposés reliée électriquement respectivement dans la zone entre le rotor (12) et la nacelle (26).

2. Procédé selon la revendication 1, **caractérisé en ce que** l'élément de contact flexible côté pale de rotor est réalisé sous la forme d'un contact glissant, l'énergie électrique étant de préférence transmise sur l'élément de contact disposé au niveau de la nacelle (26), notamment au niveau d'un côté extérieur de la nacelle (26) qui fait de préférence face au rotor (12).

3. Procédé selon la revendication 1 ou 2, **caractérisé en ce que** l'énergie électrique est transmise par l'intérieur de la pale de rotor (14) au moyen d'un élément de dérivation (36) électriquement conducteur de l'élément parafoudre (34) vers l'élément de contact (40).

4. Procédé selon l'une des revendications précédentes, **caractérisé en ce qu'**au moins pratiquement aucune énergie électrique de l'éclair n'est conduite au moyen de l'axe de rotor (20) et/ou du moyeu de rotor (16) et/ou des équipements électriques et/ou mécaniques et d'autres composants à l'intérieur et/ou à l'extérieur de la nacelle (26).

5. Aérogénérateur destiné à mettre en oeuvre un procédé selon l'une des revendications 1 à 4, comprenant un rotor (12) ayant au moins une pale de rotor (14), le rotor (12) étant monté à rotation, au moyen d'un axe de rotation (20) horizontal, sur une nacelle (26) qui est de préférence montée à rotation sur un mât (32) et l'au moins une pale de rotor (14) possédant au moins un élément parafoudre (34) conducteur, de préférence sur la surface et/ou dans la zone de la pointe de la pale, le rotor (12) possédant au moins une pièce de contact (38) électriquement conductrice destinée à transmettre l'énergie électrique d'un éclair sur un élément de contact (40) de la nacelle (26), une pièce de contact (38) flexible côté rotor ou côté pale de rotor étant présente pour la transmission de l'énergie électrique sur l'élément de contact (40) au niveau de la nacelle (26) afin de dériver l'énergie électrique de l'éclair par le biais de la surface de la nacelle (26), les conducteurs électriques destinés à dériver l'énergie électrique d'un éclair étant pratiquement exclusivement présents à l'extérieur de la nacelle, **caractérisé en ce que** la pièce de contact (38) du rotor (12) et l'élément de contact (40) de la nacelle (26) sont disposés de manière reliée électriquement dans la zone entre le rotor (12) et la nacelle (26) en vue de dériver l'énergie électrique d'un éclair.

6. Aérogénérateur selon la revendication 5, **caractérisé en ce que** l'au moins une pièce de contact (38) est disposée au niveau de la pale de rotor (14), notamment au niveau de chacune des pales de rotor (14), et/ou au niveau du moyeu de rotor (16), l'au moins une pièce de contact (38) ne se trouvant de préférence notamment pas en contact électriquement conducteur avec l'axe de rotor (20) et/ou le moyeu de rotor (16).

7. Aérogénérateur selon la revendication 5 ou 6, **caractérisé en ce que** la pièce de contact (38) du rotor (12) est disposée sur le côté du moyeu de rotor (16) qui fait face à la nacelle (26) et **en ce que** l'élément de contact (40) de la nacelle (26) est disposé au niveau du côté de la nacelle (26) qui fait face au rotor (12).

8. Aérogénérateur selon l'une des revendications 5 à 7, **caractérisé en ce que** la pièce de contact (38) et l'élément de contact (40) sont configurés en correspondance de telle sorte qu'une transmission de l'énergie électrique peut être réalisée indépendamment de l'état de rotation du rotor (12), la pièce de contact (38) au niveau du rotor (12) se trouvant de préférence en contact électriquement conducteur au moins presque ininterrompu avec l'élément de contact (40) correspondant au niveau de la nacelle (26) pendant la rotation du rotor (12).

9. Aérogénérateur selon l'une des revendications 5 à 8, **caractérisé en ce que** l'élément de contact (38) côté nacelle est réalisé sous la forme d'un contact glissant, notamment sous la forme d'un anneau de contact et/ou d'un collecteur tournant, l'axe de rotation (20) du rotor (12) traversant de préférence l'intérieur de l'élément de contact (40) de forme annulaire, de préférence au moins presque au centre, et/ou **en ce que** la pièce de contact (38) côté rotor est réalisée sous la forme d'une pièce de contact flexible, de préférence sous la forme d'un balai, d'une tôle élastique et/ou d'un contact chargé par ressort.

10. Aérogénérateur selon l'une des revendications 5 à 9, **caractérisé en ce qu'**un conducteur électrique qui s'étend notamment à l'intérieur de la pale de rotor (14), notamment un élément de dérivation (36), en vue de dériver l'énergie électrique de la foudre est relié à l'élément parafoudre électriquement conducteur, le conducteur étant de préférence réalisé sous la forme d'un fil.

11. Aérogénérateur selon l'une des revendications 5 à 10, **caractérisé en ce qu'**au moins un conducteur supplémentaire destiné à relier électriquement l'élément de contact (40) avec au moins un parafoudre supplémentaire, notamment un parafoudre côté toit et/ou en forme de tige, est disposé à l'extérieur sur le boîtier (28) de la nacelle (26).

12. Aérogénérateur selon l'une des revendications 5 à 11, **caractérisé en ce que** l'au moins un élément de contact (10) au niveau de la nacelle (26) est réalisé sous la forme d'un conducteur électrique plat, notamment en forme de plaque ou de couche, de préférence sous la forme d'une plaque métallique.

13. Aérogénérateur selon l'une des revendications 5 à 12, **caractérisé en ce que** l'axe de rotor (20) et/ou l'engrenage et/ou le générateur ne possèdent pas de liaison électriquement conductrice avec l'une des pales de rotor (14) et/ou les éléments parafoudres (34), des isolations étant de préférence présentes.

14. Aérogénérateur selon l'une des revendications 5 à 13, **caractérisé en ce qu'**entre la nacelle (26) et le mât (32), notamment entre les parafoudres de ceux-ci, est établie une liaison électriquement conductrice, de préférence sous la forme d'un contact glissant.

15. Aérogénérateur selon l'une des revendications 5 à 14, **caractérisé en ce qu'**un élément de dérivation (36) électriquement conducteur relié à l'élément parafoudre (34) électriquement conducteur s'étend à l'intérieur de la pale de rotor (14) en vue de la dérivation de l'énergie électrique d'un éclair vers la pièce de contact (38).
